# EUROPEAN PATENT SPECIFICATION

(11) **EP 4 461 612 B1**
(45) Date of publication and mention of the grant of the patent: **06.05.2026**
(21) Application number: 23737136.4
(22) Date of filing: 06.01.2023
(51) Int. Cl.: B60W 30/18, B60L 15/20, B60W 10/06, B60W 10/08, B60W 50/00

(54) **FRONT-DRIVE VEHICLE TORQUE CONTROL METHOD AND VEHICLE**
VERFAHREN ZUR STEUERUNG DES DREHMOMENTS EINES FRONTGETRIEBENEN FAHRZEUGS UND FAHRZEUG
PROCÉDÉ DE COMMANDE DE COUPLE DE VÉHICULE À ENTRAÎNEMENT AVANT ET VÉHICULE

(30) Priority: 07.01.2022 CN 202210018323
(43) Date of publication of application: 13.11.2024
(73) Proprietor: Great Wall Motor Company Limited, Baoding, Hebei 071000 (CN)
(72) Inventor: CUI, Wenxia, Baoding, Hebei 071000 (CN); CHANG, Cheng, Baoding, Hebei 071000 (CN); CHEN, Qilin, Baoding, Hebei 071000 (CN); CAO, Zhimin, Baoding, Hebei 071000 (CN)
(74) Representative: Klunker IP Patentanwälte PartG mbB
(86) International application number: PCT/CN2023/070911
(87) International publication number: WO 2023/131274

(56) References cited:
- CN-A- 107 107 915
- CN-A- 110 654 370
- CN-A- 110 816 293
- CN-A- 112 896 167
- CN-A- 113 771 644
- CN-A- 115 123 195
- JP-A- H01 271 620
- US-A- 5 631 829
- US-A1- 2020 108 816
- US-A1- 2021 129 667

## Description

### TECHNICAL FIELD

The present invention relates to the field of vehicle technology, and in particular, to a torque control method for a front-drive vehicle and a vehicle.

### BACKGROUND

A front-drive vehicle refers to a vehicle that is driven by the front wheels. During the traveling of a front-drive vehicle, for example, when the vehicle is accelerating or braking to slow down over a speed bump, the front wheels will slip briefly. Since the friction coefficient of the speed bump is smaller than the friction coefficient of the road surface, the adhesion of the front wheels will decrease when the front wheels of the vehicle pass over the speed bump. Moreover, the vehicle is in the state of acceleration or braking deceleration. For example, if the accelerator pedal is kept at a certain position, the reduction in adhesion will cause the rotation speed of the front axle to soar rapidly, resulting in front-wheel slippage. When the front wheels slip, the vehicle body will skid to a certain extent, resulting in instability of the vehicle body.

Although the vehicle has an ESP system (electronic stability program), which is able to intervene to keep the vehicle stable in the event of wheel slip, the ESP system does not intervene to keep the vehicle stable during this period as the vehicle's travel time on a speed bump is usually very short.

CN 110 816 293 A discloses a method for realizing vehicle stability control based on a motor controller, wherein the method comprises: firstly, a slip rate of a vehicle is calculated, and whether the vehicle slips is judged through the slip rate; it is judged that the vehicle slips if the slip rate exceeds a threshold value for a certain period of time t, and a numerical value for reducing torque is determined according to the slip rate and the vehicle speed when the vehicle slips; and simultaneously, an anti-slip flag position is sent to a vehicle controller, whether the motor controller meets the anti-slip requirement is judged by the vehicle controller according to the vehicle requirement at the moment, if the motor controller does not meet the requirement, the motor controller is required to exit, and if the motor controller meets the requirement, the motor controller performs driving anti-slip. The threshold value of the slip rate and the threshold value of the judgment time are dynamic.

### SUMMARY

### TECHNICAL PROBLEMS

It is an object of the present invention to provide a torque control method for a front-drive vehicle and a vehicle which can reduce the rotation speed of the front axle of the power mechanism and prevent the rotation speed of the front axle from increasing rapidly, thereby alleviating the degree of slippage of the vehicle's front wheels and solving the problem that the ESP system cannot intervene in a short period to maintain the stability of the vehicle body when the front wheels of the vehicle slip.

### TECHNICAL SOLUTIONS

The object is achieved respectively by the features of one of the independent claims. Further embodiments are defined in the respective dependent claims.

### ADVANTAGEOUS EFFECTS

The present invention provides a torque control method for a front-drive vehicle and a vehicle. When the front-drive vehicle accelerates or brakes to decelerate through a speed bump, for example, the adhesion of the front wheel is reduced, which causes the rotation speed of the power mechanism (such as a motor or an engine) to increase significantly, and the front wheel will slip. In the present invention, in view that the rear wheels of the front-drive vehicle will not experience the above-mentioned slip phenomenon, the reference rotation speed of the power mechanism at this time is determined by the rear-wheel rotation speed and the reference driving speed, thereby reflecting the normal rotation speed of the power mechanism. Afterwards, the ratio of the reference speed to the actual rotation speed of the power mechanism is calculated. When the ratio is greater than or equal to the preset threshold, it indicates that the actual rotation speed of the power mechanism may be significantly increased due to the above-mentioned slip phenomenon. Accordingly, the output torque of the power mechanism can be reduced to prevent the actual rotation speed of the power mechanism from increasing rapidly, thereby alleviating the extent of slipping of the front wheels.

### BRIEF DESCRIPTION OF THE DRAWINGS

In order to more clearly illustrate the technical solutions of the present invention, the drawings used in the description of the invention or the prior art will be briefly introduced below.
FIG. 1 is a schematic diagram of an application scenario of a torque control method for a front-drive vehicle;
FIG. 2 is a schematic flow chart of the torque control method for a front-drive vehicle;
FIG. 3 is a schematic diagram of a reference speed and an actual rotation speed of a motor;
FIG. 4 is a schematic diagram of the structure of a torque control apparatus for a front-drive vehicle; and
FIG. 5 is a schematic diagram of an electronic device.

### DETAILED DESCRITPON OF THE INVENTION

In the following description, specific details such as specific system structures, technologies, and the like are provided for the purpose of explanation rather than limitation, so as to provide a thorough understanding of the present invention. Detailed descriptions of well-known systems, devices, circuits, and methods are omitted to prevent unnecessary details from obstructing the description of the present invention.

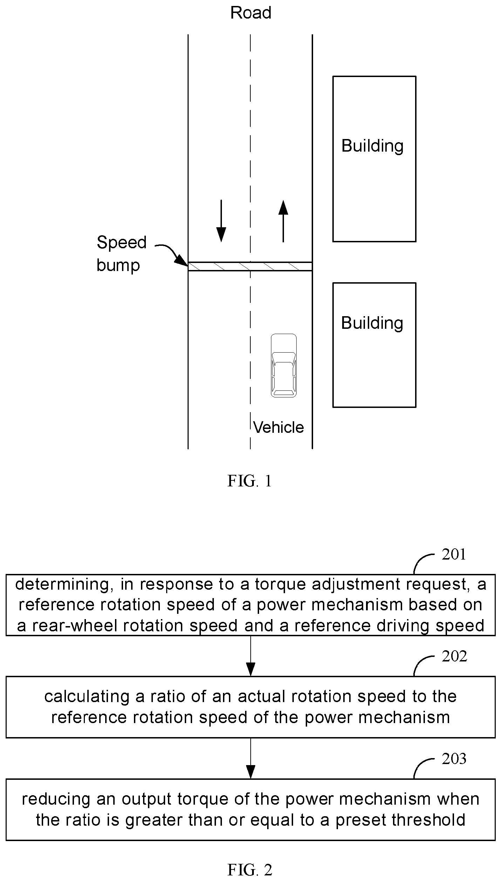

FIG. 1 shows an invention scenario of the torque control method for a front-drive vehicle. Referring to FIG. 1, in this application scenario, a front-drive vehicle is traveling on a road, for example, when the front-drive vehicle is accelerating or braking to decelerate over a speed bump, the adhesion of the front wheel is reduced, which results in a significant increase in the rotation speed of the power mechanism (such as a motor or an engine), and the front wheel will slip.

The following is an example of a vehicle accelerating over a speed bump. When the vehicle accelerates (for example, the opening degree of the accelerator pedal is 30%) and travels over a speed bump, the friction coefficient of the road surface is relatively large, the vehicle has a strong grip on the road surface, and the front wheels of the vehicle usually do not slip. When the front wheels of the vehicle travel over the speed bump, because the friction coefficient of the speed bump is smaller than the friction coefficient of the road surface, the adhesion is reduced. If the output torque of the motor remains unchanged, the front-wheel rotation speed will rise rapidly, causing the fronts wheel to slip. In addition, when the front-wheel rotation speed rises rapidly, abnormal noise may also be generated from the front suspension of the vehicle.

Considering that the rear wheels of a front-drive vehicle will not experience the above-mentioned slip phenomenon, here, the reference rotation speed of the power mechanism is determined by the rear-wheel rotation speed and the reference driving speed, thereby reflecting the normal rotation speed of the power mechanism. Afterwards, the ratio of the reference speed to the actual rotation speed of the power mechanism is calculated. When the ratio is greater than or equal to a preset threshold, it indicates that the actual rotation speed of the power mechanism may be greatly increased due to the above-mentioned slip phenomenon. At this time, the output torque of the power mechanism can be reduced to prevent the actual rotation speed of the power mechanism from increasing rapidly, thereby alleviating the degree of slippage of the front wheels.

In conjunction with FIG. 1, the front wheel slippage caused by acceleration or braking of the vehicle when traveling over a speed bump is taken as an example to describe the torque control method for a front-drive vehicle.

Referring to FIG. 2, a flowchart of the torque control method for a front-drive vehicle is shown, which is described in detail below.

In step 201, a reference speed of a power mechanism is determined based on a rear-wheel rotation speed and a reference driving speed in response to a torque adjustment request.

In this step, the torque adjustment request is generated based on the vehicle operating conditions, and the reference speed may be the rotation speed of the power mechanism calculated by a vehicle controller, which is different from the actual rotation speed of the power mechanism. The actual rotation speed at this time will increase rapidly, while the reference speed can reflect the normal rotation speed of the power mechanism when the front wheels are not slipping. The vehicle controller may be an HCU (hybrid control unit) or other controllers, which are not limited in the embodiments of the present invention.

The rear-wheel rotation speed can be obtained by a wheel speed sensor disposed on the rear wheels. Since the rear wheels include a left rear wheel and a right rear wheel, the rotation speed of the left rear wheel and the rotation speed of the right rear wheel can be averaged to balance the difference in wheel speeds of the two rear wheels to more accurately determine the rear-wheel rotation speed. The rear-wheel radius is a preset value and will not be described in detail herein.

The above-mentioned determination of the reference rotation speed of the power mechanism based on the rear-wheel rotation speed and the reference driving speed may include: determining a vehicle-speed offset corresponding to the reference driving speed and the vehicle operating condition through a preset data table, where the preset data table contains the correspondence between the reference driving speed, the vehicle operating condition and the vehicle-speed offset; correcting the reference driving speed according to the vehicle-speed offset; and determining the reference rotation speed of the power mechanism according to the rear-wheel rotation speed and the corrected reference driving speed.

As an example, the reference driving speed may be determined and sent to the vehicle controller by the ESP system. For example, the ESP system may determine the reference driving speed of the vehicle by multiplying the rear-wheel rotation speed by the rear-wheel radius. Specifically, the reference driving speed may be determined by *v = nπr, where v* is the reference driving speed, n is the rear-wheel rotation speed, and r is the rear-wheel radius.

In addition, the reference driving speed may also be determined by the vehicle controller through the product of the rear-wheel rotation speed and the rear-wheel radius.

Exemplarily, the vehicle operating condition may include an opening degree of the accelerator pedal, a steering wheel angle, a road slope, and a wheel speed difference, where the wheel speed difference is a difference between the rotation speed of the left front wheel and the rotation speed of the right front wheel. Correspondingly, the above-mentioned determination of the vehicle-speed offset corresponding to the reference driving speed and the vehicle operating condition through a preset data table may include: determining a first vehicle-speed offset component corresponding to the opening degree of the accelerator pedal, a second vehicle-speed offset component corresponding to the steering wheel angle, a third vehicle-speed offset component corresponding to the road slope, and a fourth vehicle-speed offset component corresponding to the wheel speed difference through a preset data table; and determining the vehicle-speed offset based on the first vehicle-speed offset component to the fourth vehicle-speed offset component.

For example, the first vehicle-speed offset component, the second vehicle-speed offset component, the third vehicle-speed offset component, and the fourth vehicle-speed offset component may be added up to obtain the vehicle-speed offset. The first vehicle-speed offset component, the second vehicle-speed offset component, the third vehicle-speed offset component, and the fourth vehicle-speed offset component are all positive numbers less than 1, and the calculated vehicle-speed offset is within the range of (0, 1).

Exemplarily, the above-mentioned correction of the reference driving speed according to the vehicle-speed offset may include: correcting the reference driving speed based on *v'*=(1+ *a)·v, where a* is the vehicle-speed offset, v is the reference driving speed, and *v'* is the corrected reference driving speed.

Exemplarily, the above-mentioned determination of the reference rotation speed of the power mechanism based on the rear-wheel rotation speed and the corrected reference driving speed may include: determining the corrected rear-wheel rotation speed based on the corrected reference driving speed and the rear-wheel radius; determining the reference rotation speed of the power mechanism based on the corrected rear-wheel rotation speed and a preset speed ratio, where the preset speed ratio characterizes a relationship between the rear-wheel rotation speed and the rotation speed of the power mechanism.

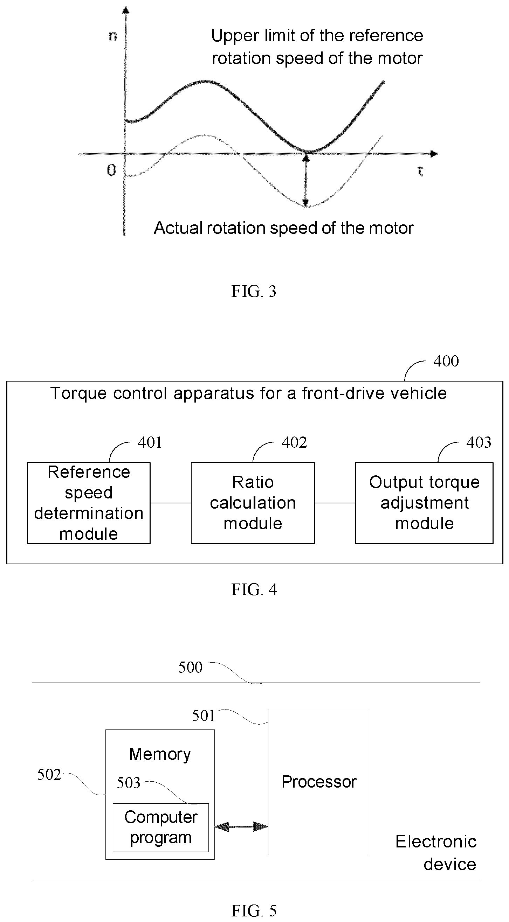

As shown in FIG. 3, under normal operating conditions, the actual rotation speed of the motor is less than the upper limit and greater than the lower limit of the reference speed of the motor. Under conditions when traveling over a speed bump, the actual rotation speed of the motor increases rapidly and exceeds the upper limit of the reference speed of the motor, causing the front wheels to slip.

Specifically, the product of the corrected reference driving speed and the rear-wheel radius can be calculated to determine the corrected rear-wheel rotation speed, *n'= v'*/*πr*. Then, the reference rotation speed of the power mechanism can be determined according to the corrected rear-wheel rotation speed *n'* and the preset speed ratio. The preset speed ratio may be specifically a ratio between the rear-wheel rotation speed and the rotation speed of the power mechanism. For example, if the preset speed ratio is *b*, the reference rotation speed of the power mechanism may be *n'*/*b*.

Before step 201, the method may further include: generating a torque adjustment request when the vehicle operating condition meets a preset condition. The vehicle operating condition may include one or more of a gear position, a reference driving speed, an opening degree of the accelerator pedal, a steering wheel angle, a road slope, and a wheel speed difference between the rotation speed of the left front wheel and the rotation speed of the right front wheel. The vehicle operating condition meeting the preset condition may include one or more of the following situations: the gear position is a forward gear position, the reference driving speed is within a preset vehicle speed range, the opening degree of the accelerator pedal is within a preset opening range, the steering wheel angle is less than a preset angle threshold, the road slope is less than a preset slope threshold, and the wheel speed difference between the rotation speed of the left front wheel and the rotation speed of the right front wheel is less than a speed threshold.

Exemplarily, when the vehicle operating condition meets the above-mentioned preset conditions, a torque adjustment request is generated, the torque adjustment flag is activated, and then steps 201 to 203 are executed, in which the output torque is adjusted when the front wheels of the vehicle are determined to be slipping. If the vehicle operating condition does not meet the above-mentioned preset conditions, no torque adjustment request is generated, the torque adjustment flag is not activated, and steps 201 to 203 are not executed accordingly.

It should be noted that the above-mentioned preset vehicle speed range, preset opening range, preset turning angle threshold, preset slope threshold, and speed threshold are not specifically limited in the embodiments of the present invention. Those skilled in the art can set them according to actual needs, which are all within the protection scope of the present invention.

In step 202, a ratio of the actual rotation speed to the reference rotation speed of the power mechanism is calculated.

The above ratio is configured to characterize the relationship between the actual rotation speed of the power mechanism and the reference speed thereof. The larger the above ratio is, the more the actual rotation speed of the power mechanism deviates from the normal speed when the front wheel is not slipping. The closer the above ratio is to 1, the closer the actual rotation speed of the power mechanism is to the normal speed when the front wheel is not slipping. Therefore, by calculating the above ratio, it is possible to determine whether the actual rotation speed of the power mechanism deviates from the normal speed and the degree of deviation from the normal speed, thereby determining whether the output torque of the power mechanism needs to be controlled to alleviate the extent of slipping of the front wheels.

In step 203, the output torque of the power mechanism is reduced when the above ratio is greater than or equal to a preset threshold.

The above-mentioned preset threshold value may be calibrated based on experimental data. If the above-mentioned ratio is greater than or equal to the above-mentioned preset threshold value, it means that the output torque of the power mechanism is too large at this moment, and the output torque of the power mechanism needs to be reduced to suppress the rapid increase of the front-wheel rotation speed and alleviate the extent of slipping of the front wheels. If the above-mentioned ratio is less than the above-mentioned preset threshold value, it means that the output torque of the power mechanism is large at this moment, but it has little effect on the driving of the vehicle, and the output torque of the power mechanism may not be adjusted.

Exemplarily, the above-mentioned reduction in the output torque of the power mechanism may specifically include: determining a weighting coefficient of the torque based on the above-mentioned ratio, where the ratio is inversely proportional to the weighting coefficient of the torque, and the weighting coefficient of the torque is configured to characterize the degree of adjustment of the output torque of the power mechanism; and adjusting the output torque of the power mechanism based on the weighting coefficient of the torque.

As an example, the weighting coefficient of the torque may be a value in the range of (0, 1). The weighting coefficient of the torque is multiplied by the output torque of the power mechanism to calculate the adjusted output torque, and then the output torque of the power mechanism is adjusted according to the calculated output torque, thereby reducing the output torque of the power mechanism to prevent the actual rotation speed of the power mechanism from increasing rapidly and to alleviate the extent of front wheel slip.

The weighting coefficient of the torque corresponding to the above ratio can be determined based on a preset data table, which stores a correspondence between the ratio and the weighting coefficient of the torque. The larger the ratio, the smaller the corresponding weighting coefficient of the torque.

For example, the ratio and the weighting coefficient of the torque may be reciprocals of each other, and the weighting coefficient of the torque may be used to adjust the output torque of the power mechanism to an output torque of the power mechanism when the front wheels of the vehicle do not slip.

For another example, the reciprocal of the ratio may be smaller than the weighting coefficient of the torque, and the output torque of the power mechanism can be brought closer to an output torque of the power mechanism when the front wheels of the vehicle do not slip through the weighting coefficient of the torque.

The above-mentioned preset threshold may be determined based on experiments and will not be described in detail herein.

In the above-mentioned torque control method for a front-drive vehicle, taking into account that the rear wheels of the front-drive vehicle will not experience the above-mentioned slip phenomenon. Therefore, the reference rotation speed of the power mechanism at this moment is determined by the rear-wheel rotation speed and the reference driving speed, thereby reflecting the normal rotation speed of the power mechanism. Afterwards, the ratio of the reference speed to the actual rotation speed of the power mechanism is calculated. A ratio greater than or equal to the preset threshold indicates that the actual rotation speed of the power mechanism may be greatly increased due to the above-mentioned slip phenomenon. At this moment, the output torque of the power mechanism can be reduced to prevent the actual rotation speed of the power mechanism from increasing rapidly, thereby alleviating the extent of slipping of the front wheels.

It should be understood that the size of the serial numbers of the steps in the above embodiments does not mean the order of execution. The execution order of each process should be determined by its function and internal logic, and should not constitute any limitation on the implementation process of the embodiments of the present invention.

The following is a device of the present invention. For details that are not specifically described, please refer to the corresponding method described above.

FIG. 4 shows a schematic diagram of the structure of a torque control apparatus for a front-drive vehicle, which is described in detail as follows:
As shown in FIG. 4, a torque control apparatus 400 for a front-drive vehicle may include a reference speed determination module 401, a ratio calculation module 402, and an output torque adjustment module 403.

The reference speed determination module 401 is configured to determine a reference rotation speed of the power mechanism based on a rear-wheel rotation speed and a reference driving speed in response to a torque adjustment request. The torque adjustment request is generated based on a vehicle operating condition. The ratio calculation module 402 is configured to calculate a ratio of an actual rotation speed to the reference rotation speed of the power mechanism. The output torque adjustment module 403 is configured to reduce an output torque of the power mechanism when the ratio is greater than or equal to a preset threshold.

In one possible implementation, the reference speed determination module 401 may include: a vehicle-speed offset determination unit, configured to determine a vehicle-speed offset corresponding to the reference driving speed and the vehicle operating condition through a preset data table, where the preset data table contains a correspondence between the reference driving speed, the vehicle operating condition, and the vehicle-speed offset; a correction unit, configured to correct the reference driving speed according to the vehicle-speed offset; and a reference speed determination unit, configured to determine the reference rotation speed of the power mechanism according to a rear-wheel rotation speed and the corrected reference driving speed.

The vehicle operating condition may include an opening degree of the accelerator pedal, a steering wheel angle, a road slope, and a wheel speed difference, where the wheel speed difference is the difference between the rotation speed of the left front wheel and the rotation speed of the right front wheel. The vehicle-speed offset determination unit may be specifically configured to: determine a first vehicle-speed offset component corresponding to the opening degree of the accelerator pedal, a second vehicle-speed offset component corresponding to the steering wheel angle, a third vehicle-speed offset component corresponding to the road slope, and a fourth vehicle-speed offset component corresponding to the wheel speed difference through the preset data table; and determine the vehicle-speed offset based on the first vehicle-speed offset component to the fourth vehicle-speed offset component.

The correction unit may be specifically configured to correct the reference driving speed based on *v'*= (1+ *a)·v, where a* is the vehicle-speed offset, v is the reference driving speed, and *v'* is the corrected reference driving speed.

The reference speed determination unit may be specifically configured to: determine a corrected rear-wheel rotation speed based on the corrected reference driving speed and a rear-wheel radius; determine the reference rotation speed of the power mechanism based on the corrected rear-wheel rotation speed and a preset speed ratio, where the preset speed ratio characterizes the relationship between the rear-wheel rotation speed and the rotation speed of the power mechanism.

In one possible implementation, the output torque adjustment module 403 may be specifically configured to: determine a weighting coefficient of the torque based on the above ratio, where the above ratio is inversely proportional to the weighting coefficient of the torque, and the weighting coefficient of the torque is used to characterize a degree of adjustment of the output torque of the power mechanism; and adjust the output torque of the power mechanism based on the weighting coefficient of the torque.

In a possible implementation, the torque control apparatus 400 for a front-drive vehicle may further include: a torque adjustment request generation module, configured to generate a torque adjustment request when the vehicle operating condition meets a preset condition. The vehicle operating condition may include one or more of a gear position, a reference driving speed, an opening degree of the accelerator pedal, a steering wheel angle, a road slope, and a wheel speed difference between the rotation speed of a left front wheel and the rotation speed of a right front wheel. The vehicle operating condition meeting the preset condition includes one or more of the following situations: the gear position is a forward gear position, the reference driving speed is in a preset vehicle speed range, the opening degree of the accelerator pedal is in a preset opening area, the steering wheel angle is less than a preset angle threshold, the road slope is less than a preset slope threshold, and the wheel speed difference between the rotation speed of the left front wheel and the rotation speed of the right front wheel is less than a speed threshold.

It should be noted that, the technical means and technical effects not described in detail in the embodiments of the device of the present invention can be referred to the corresponding technical means and technical effects in the embodiments of the method of the present invention.

The present invention also provides a vehicle, including an electronic device, which includes a memory, a processor, and a computer program stored in the memory and executable on the processor. When executed by the processor, the computer program implements the steps of the torque control method for a front-drive vehicle in any of the above-mentioned embodiments, such as steps 201 to 203 shown in FIG. 2.

The present invention also provides a computer program product having a program code, which, when running in a corresponding processor, controller, computing device, or terminal, executes the steps of the torque control method for a front-drive vehicle in any of the above-mentioned embodiments, such as steps 201 to 203 shown in FIG. 2.

Those skilled in the art will appreciate that the methods and apparatus proposed by the present invention can be implemented in various forms of hardware, software, firmware, dedicated processors, or combinations thereof. The dedicated processor may include an application specific integrated circuit (ASIC), a reduced instruction set computer (RISC), and/or a field programmable gate array (FPGA). The proposed methods and apparatus are preferably implemented as a combination of hardware and software. The software is preferably installed on a program storage device as an application. It is typically based on a machine with a computer platform having hardware, such as one or more central processing units (CPUs), random access memories (RAMs), and one or more input/output (I/O) interfaces. An operating system is also typically installed on the computer platform. The various processes and functions described herein may be part of an application, or a portion thereof may be executed by an operating system.

FIG. 5 is a schematic diagram of an electronic device provided by the present invention. As shown in FIG. 5, the electronic device 500 includes: a processor 501, a memory 502, and a computer program 503 stored in the memory 502 and executable on the processor 501. When executed by the processor 501, the computer program 503 implements the steps of the torque control method for a front-drive vehicle in any of the above-mentioned embodiments, such as steps 201 to 203 shown in FIG. 2. Alternatively, when the processor 501 executes the computer program 503, the functions of the modules/units in the above-mentioned device embodiments are implemented, such as the functions of the modules/units 401 to 403 shown in FIG. 4.

Exemplarily, the computer program 503 may be divided into one or more modules/units, which are stored in the memory 502 and executed by the processor 501 to complete/implement the solution provided in the present invention. The one or more modules/units may be a series of computer program instruction segments capable of completing specific functions, which are used to describe the execution process of the computer program 503 in the electronic device 500. For example, the computer program 503 may be divided into modules/units 401 to 403 as shown in FIG. 4.

The electronic device 500 may be a computing device such as a vehicle controller, a mobile phone, a laptop, a PDA, and a cloud server. The electronic device 500 may include, but is not limited to, a processor 501 and a memory 502. Those skilled in the art may understand that FIG. 5 is only an example of the electronic device 500 and does not constitute a limitation on the electronic device 500. The electronic device 500 may include more or fewer components than illustrated, or may combine certain components, or different components. For example, the electronic device 500 may also include input and output devices, network access devices, buses, and the like.

The processor 501 may be a central processing unit (CPU), or other general-purpose processors, digital signal processors (DSP), application-specific integrated circuits (ASIC), field-programmable gate arrays (FPGA), or other programmable logic devices, discrete gate or transistor logic devices, discrete hardware components, and the like. A general-purpose processor may be a microprocessor or any conventional processor, and the like.

The memory 502 may be an internal storage unit of the electronic device 500, such as a hard disk or memory of the electronic device 500. The memory 502 may also be an external storage device of the electronic device 500, such as a plug-in hard disk, a smart media card (SMC), a secure digital (SD) card, a flash card, and the like equipped on the electronic device 500. Further, the memory 502 may also include both an internal storage unit of the electronic device 500 and an external storage device. The memory 502 is configured to store the computer program and other programs and data required by the electronic device. The memory 502 may also be configured to temporarily store data that has been output or is to be output.

Those skilled in the art can clearly understand that for the convenience and simplicity of description, only the division of the above-mentioned functional units and modules is used as an example for illustration. In practical applications, it is possible to assign the above functions to be completed by different functional units and modules as needed, that is, the internal structure of the device can be divided into different functional units or modules to complete all or part of the functions described above. The functional units and modules in the embodiment can be integrated in a processing unit, or each unit can exist physically separately, or two or more units can be integrated into one unit. The above-mentioned integrated unit can be implemented in the form of hardware or in the form of software functional units. In addition, the specific names of the functional units and modules are only for the convenience of distinguishing each other, and are not to limit the scope of protection of this invention. The specific working process of the units and modules in the above-mentioned system can be referred to the corresponding process in the aforementioned method embodiments, which will not be repeated herein.

In the above, the description of each implementation has its own focus. For parts that are not described or recorded in detail in a particular implementation, reference can be made to the relevant descriptions of other implementations.

Those of ordinary skill in the art will appreciate that the units and algorithm steps of each example described in conjunction with the embodiments disclosed herein can be implemented in electronic hardware, or a combination of computer software and electronic hardware. Whether these functions are performed in hardware or software depends on the specific application and design constraints of the technical solution. The skilled person can use different methods to implement the described functions for each specific application, but such implementation should not be considered to be beyond the scope of this invention.

It should be understood that the disclosed devices/terminals and methods can be implemented in other ways. For example, the device/terminal embodiments described above are only schematic. For example, the division of the modules or units is only a logical function division. There may be other division methods in actual implementation, such as multiple units or components can be combined or integrated into another system, or some features can be ignored or not executed. Another point is that the mutual coupling or direct coupling or communication connection shown or discussed can be through some interfaces, indirect coupling or communication connection of devices or units, which can be electrical, mechanical or other forms.

The units described as separate components may or may not be physically separated, and the components shown as units may or may not be physical units, that is, they may be located in one place or distributed on multiple network units. Some or all of the units may be selected according to actual needs to achieve the purpose of the solution of this embodiment.

In addition, each functional unit may be integrated into one processing unit, or each unit may exist physically separately, or two or more units may be integrated into one unit. The above-mentioned integrated unit may be implemented in the form of hardware or in the form of software functional units.

If the integrated module/unit is implemented in the form of a software functional unit and sold or used as an independent product, it can be stored in a computer-readable storage medium. Based on this understanding, the present invention implements all or part of the processes in the above-mentioned method, and can also be completed by instructing the relevant hardware through a computer program. The computer program can be stored in a non-volatile computer-readable storage medium. When the computer program is executed by the processor, the steps of the above-mentioned torque control method for a front-drive vehicle embodiments can be implemented. Here, the computer program includes computer program code, and the computer program code can be in source code form, object code form, executable file, or some intermediate form. The computer-readable storage medium can include: any entity or device that can carry the computer program code, recording medium, U disk, mobile hard disk, disk, optical disk, computer memory, read-only memory (ROM), random access memory (RAM), electric carrier signal, telecommunication signal and software distribution medium.

## Claims

1. A torque control method for a front-drive vehicle, the method comprising:
a calculating step (S202) of calculating a ratio of an actual rotation speed to a reference rotation speed of a power mechanism such as a motor or an engine; and
a reducing step (S203) of reducing an output torque of the power mechanism when the ratio is greater than or equal to a preset threshold calibrated based on experimental data;
**characterized in that,** in response to a torque adjustment request generated based on a vehicle operating condition, the method comprises:
a determining step (S201) of determining the reference rotation speed of the power mechanism based on a rear-wheel rotation speed and a reference driving speed determined by v = n π r, where v is the reference driving speed, n is the rear-wheel rotation speed, and r is a rear-wheel radius, wherein the determining step (S201) comprises:
determining a vehicle-speed offset corresponding to the reference driving speed and the vehicle operating condition through a preset data table, wherein the preset data table comprises a correspondence between the reference driving speed, the vehicle operating condition, and the vehicle-speed offset;
correcting the reference driving speed according to the vehicle-speed offset; and
determining the reference rotation speed of the power mechanism according to the rear-wheel rotation speed and the corrected reference driving speed.

2. The torque control method for a front-drive vehicle as claimed in claim 1,
wherein the step of (S201) determining a vehicle-speed offset corresponding to the reference driving speed and the vehicle operating condition through a preset data table comprises:
determining, a first vehicle-speed offset component corresponding to the opening degree of the accelerator pedal, a second vehicle-speed offset component corresponding to the steering wheel angle, a third vehicle-speed offset component corresponding to the road slope, and a fourth vehicle-speed offset component corresponding to the wheel speed difference through the preset data table; and
determining the vehicle-speed offset based on the first vehicle-speed offset component to the fourth vehicle-speed offset component.

3. The torque control method for a front-drive vehicle as claimed in claim 2,
wherein the step of (S201) determining the vehicle-speed offset based on the first vehicle-speed offset component to the fourth vehicle-speed offset component comprises:
summing the first vehicle-speed offset component, the second vehicle-speed offset component, the third vehicle-speed offset component, and the fourth vehicle-speed offset component to obtain the vehicle-speed offset.

4. The torque control method for a front-drive vehicle as claimed in claim 1,
wherein the step of correcting the reference driving speed according to the vehicle-speed offset comprises:
correcting the reference driving speed based on v'= (1+a)·v, wherein a is the vehicle-speed offset, v is the reference driving speed, and v' is the corrected reference driving speed.

5. The torque control method for a front-drive vehicle as claimed in claim 1,
wherein the step of (S201) determining the reference rotation speed of the power mechanism according to the rear-wheel rotation speed and a corrected reference driving speed comprises:
determining a corrected rear-wheel rotation speed according to the corrected reference driving speed and a rear-wheel radius; and
determining the reference rotation speed of the power mechanism according to the corrected rear-wheel rotation speed and a preset speed ratio, wherein the preset speed ratio represents a relationship between the rear-wheel rotation speed and a rotation speed of the power mechanism.

6. The torque control method for a front-drive vehicle as claimed in claim 1,
wherein the step of (S203) reducing an output torque of the power mechanism comprises:
determining a weighting coefficient of the torque based on the ratio; wherein the ratio is inversely proportional to the weighting coefficient of the torque, and the weighting coefficient of the torque represents a degree of adjustment of the output torque of the power mechanism; and
adjusting, the output torque of the power mechanism based on the weighting coefficient of the torque.

7. The torque control method for a front-drive vehicle as claimed in claim 6,
wherein the step of adjusting the output torque of the power mechanism based on the weighting coefficient of the torque comprises:
multiplying the weighting coefficient of the torque by the output torque of the power mechanism to calculate an adjusted output torque, and adjusting the output torque of the power mechanism according to the adjusted output torque; wherein the weighting coefficient of the torque is a value in a range of (0, 1).

8. The torque control method for a front-drive vehicle as claimed in claim 6,
wherein the step of determining a weighting coefficient of the torque based on the ratio comprises:
determining the weighting coefficient of the torque corresponding to the ratio based on a preset data table, wherein the preset data table stores a correspondence between the ratio and the weighting coefficient of the torque.

9. The torque control method for a front-drive vehicle as claimed in claim 1,
wherein before responding to the torque adjustment request, the method further comprises:
generating the torque adjustment request when the vehicle operating condition meets a preset condition;
wherein, the vehicle operating condition meeting the preset condition comprises one or more of the following: a gear position is a forward gear position, the reference driving speed is within a preset vehicle speed range, an opening degree of an accelerator pedal is within a preset opening area, a steering wheel angle is less than a preset angle threshold, a road slope is less than a preset slope threshold, and a wheel speed difference between a rotation speed of a left front wheel and a rotation speed of a right front-wheel rotation speed is less than a speed threshold.

10. A vehicle, comprising an electronic device (500), the electronic device comprising a memory (502), a processor (501), and a computer program (503) stored in the memory (502) and executable on the processor (501), wherein, when executed by the processor (501), the computer program (503) implements the steps of the torque control method for a front-drive vehicle as claimed in in any one of claims 1 to 9.

11. A non-volatile computer-readable storage medium, the computer-readable storage medium storing a computer program (503), wherein, when executed by a processor (501), the computer program (503) implements the steps of the torque control method for a front-drive vehicle as claimed in any one of claims 1 to 9.

## Patentansprüche

1. Drehmomentsteuerungsverfahren für ein Frontantriebsfahrzeug, wobei das Verfahren aufweist:
einen Berechnungsschritt (S202) des Berechnens eines Verhältnisses einer tatsächlichen Drehzahl zu einer Referenzdrehzahl eines Antriebsmechanismus, wie beispielsweise eines Elektromotors oder eines Verbrennungsmotors; und
einen Reduzierungsschritt (S203) des Reduzierens eines Ausgangsdrehmoments des Antriebsmechanismus, wenn das Verhältnis größer oder gleich einem voreingestellten Schwellenwert ist, der auf Grundlage von Versuchsdaten kalibriert ist;
**dadurch gekennzeichnet, dass** das Verfahren als Reaktion auf eine auf Grundlage eines Fahrzeugbetriebszustands erzeugte Drehmomentanpassungsanforderung aufweist:
einen Bestimmungsschritt (S201) des Bestimmens der Referenzdrehzahl des Antriebsmechanismus auf Grundlage einer Hinterraddrehzahl und einer durch v = n · π · r bestimmten Referenzfahrgeschwindigkeit, wobei v die Referenzfahrgeschwindigkeit ist, n die Hinterraddrehzahl ist und r ein Hinterradradius ist, wobei der Bestimmungsschritt (S201) aufweist:
Bestimmen eines der Referenzfahrgeschwindigkeit und dem Fahrzeugbetriebszustand entsprechenden Fahrzeuggeschwindigkeitsversatzes durch eine voreingestellte Datentabelle, wobei die voreingestellte Datentabelle eine Zuordnung zwischen der Referenzfahrgeschwindigkeit, dem Fahrzeugbetriebszustand und dem Fahrzeuggeschwindigkeitsversatz aufweist;
Korrigieren der Referenzfahrgeschwindigkeit gemäß dem Fahrzeuggeschwindigkeitsversatz; und
Bestimmen der Referenzdrehzahl des Antriebsmechanismus gemäß der Hinterraddrehzahl und der korrigierten Referenzfahrgeschwindigkeit.

2. Drehmomentsteuerungsverfahren für ein Frontantriebsfahrzeug nach Anspruch 1, wobei der Schritt (S201) des Bestimmens eines der Referenzfahrgeschwindigkeit und dem Fahrzeugbetriebszustand entsprechenden Fahrzeuggeschwindigkeitsversatzes durch eine voreingestellte Datentabelle aufweist:
Bestimmen einer ersten Fahrzeuggeschwindigkeitsversatzkomponente entsprechend dem Öffnungsgrad des Fahrpedals, einer zweiten Fahrzeuggeschwindigkeitsversatzkomponente entsprechend dem Lenkradwinkel, einer dritten Fahrzeuggeschwindigkeitsversatzkomponente entsprechend der Fahrbahnsteigung und einer vierten Fahrzeuggeschwindigkeitsversatzkomponente entsprechend der Raddrehzahldifferenz durch die voreingestellte Datentabelle; und
Bestimmen des Fahrzeuggeschwindigkeitsversatzes auf Grundlage der ersten bis vierten Fahrzeuggeschwindigkeitsversatzkomponente.

3. Drehmomentsteuerungsverfahren für ein Frontantriebsfahrzeug nach Anspruch 2,
wobei der Schritt (S201) des Bestimmens des Fahrzeuggeschwindigkeitsversatzes auf Grundlage der ersten bis vierten Fahrzeuggeschwindigkeitsversatzkomponente aufweist:
Summieren der ersten Fahrzeuggeschwindigkeitsversatzkomponente, der zweiten Fahrzeuggeschwindigkeitsversatzkomponente, der dritten Fahrzeuggeschwindigkeitsversatzkomponente und der vierten Fahrzeuggeschwindigkeitsversatzkomponente, um den Fahrzeuggeschwindigkeitsversatz zu erhalten.

4. Drehmomentsteuerungsverfahren für ein Frontantriebsfahrzeug nach Anspruch 1,
wobei der Schritt des Korrigierens der Referenzfahrgeschwindigkeit gemäß dem Fahrzeuggeschwindigkeitsversatz aufweist:
Korrigieren der Referenzfahrgeschwindigkeit auf Grundlage von v' = (1+a) · v, wobei a der Fahrzeuggeschwindigkeitsversatz ist, v die Referenzfahrgeschwindigkeit ist und v' die korrigierte Referenzfahrgeschwindigkeit ist.

5. Drehmomentsteuerungsverfahren für ein Frontantriebsfahrzeug nach Anspruch 1,
wobei der Schritt (S201) des Bestimmens der Referenzdrehzahl des Antriebsmechanismus gemäß der Hinterraddrehzahl und einer korrigierten Referenzfahrgeschwindigkeit aufweist:
Bestimmen einer korrigierten Hinterraddrehzahl gemäß der korrigierten Referenzfahrgeschwindigkeit und einem Hinterradradius; und
Bestimmen der Referenzdrehzahl des Antriebsmechanismus gemäß der korrigierten Hinterraddrehzahl und einem voreingestellten Drehzahlverhältnis, wobei das voreingestellte Drehzahlverhältnis eine Beziehung zwischen der Hinterraddrehzahl und einer Drehzahl des Antriebsmechanismus darstellt.

6. Drehmomentsteuerungsverfahren für ein Frontantriebsfahrzeug nach Anspruch 1,
wobei der Schritt (S203) des Reduzierens eines Ausgangsdrehmoments des Antriebsmechanismus aufweist:
Bestimmen eines Drehmomentgewichtungskoeffizienten auf Grundlage des Verhältnisses; wobei das Verhältnis umgekehrt proportional zu dem Drehmomentgewichtungskoeffizienten ist und der Drehmomentgewichtungskoeffizient einen Anpassungsgrad des Ausgangsdrehmoments des Antriebsmechanismus darstellt; und
Anpassen des Ausgangsdrehmoments des Antriebsmechanismus auf Grundlage des Drehmomentgewichtungskoeffizienten.

7. Drehmomentsteuerungsverfahren für ein Frontantriebsfahrzeug nach Anspruch 6,
wobei der Schritt des Anpassens des Ausgangsdrehmoments des Antriebsmechanismus auf Grundlage des Drehmomentgewichtungskoeffizienten aufweist:
Multiplizieren des Drehmomentgewichtungskoeffizienten mit dem Ausgangsdrehmoment des Antriebsmechanismus, um ein angepasstes Ausgangsdrehmoment zu berechnen, und Anpassen des Ausgangsdrehmoments des Antriebsmechanismus gemäß dem angepassten Ausgangsdrehmoment; wobei der Drehmomentgewichtungskoeffizient ein Wert im Bereich (0, 1) ist.

8. Drehmomentsteuerungsverfahren für ein Frontantriebsfahrzeug nach Anspruch 6,
wobei der Schritt des Bestimmens eines Drehmomentgewichtungskoeffizienten auf Grundlage des Verhältnisses aufweist:
Bestimmen des dem Verhältnis entsprechenden Drehmomentgewichtungskoeffizienten auf Grundlage einer voreingestellten Datentabelle, wobei die voreingestellte Datentabelle eine Zuordnung zwischen dem Verhältnis und dem Drehmomentgewichtungskoeffizienten speichert.

9. Drehmomentsteuerungsverfahren für ein Frontantriebsfahrzeug nach Anspruch 1,
wobei das Verfahren vor dem Reagieren auf die Drehmomentanpassungsanforderung ferner aufweist:
Erzeugen der Drehmomentanpassungsanforderung, wenn der Fahrzeugbetriebszustand eine voreingestellte Bedingung erfüllt;
wobei der Fahrzeugbetriebszustand, der die voreingestellte Bedingung erfüllt, eines oder mehrere der Folgenden aufweist: eine Gangstellung ist eine Vorwärtsgangstellung, die Referenzfahrgeschwindigkeit liegt innerhalb eines voreingestellten Fahrzeuggeschwindigkeitsbereichs, ein Öffnungsgrad eines Fahrpedals liegt innerhalb eines voreingestellten Öffnungsbereichs, ein Lenkradwinkel ist kleiner als ein voreingestellter Winkelschwellenwert, eine Fahrbahnsteigung ist kleiner als ein voreingestellter Steigungsschwellenwert und eine Raddrehzahldifferenz zwischen einer Drehzahl eines linken Vorderrads und einer Drehzahl eines rechten Vorderrads ist kleiner als ein Drehzahlschwellenwert.

10. Fahrzeug, das eine elektronische Vorrichtung (500) aufweist, wobei die elektronische Vorrichtung einen Speicher (502), einen Prozessor (501) und ein in dem Speicher (502) gespeichertes und auf dem Prozessor (501) ausführbares Computerprogramm (503) aufweist, wobei das Computerprogramm (503), wenn es durch den Prozessor (501) ausgeführt wird, die Schritte des Drehmomentsteuerungsverfahrens für ein Frontantriebsfahrzeug nach einem der Ansprüche 1 bis 9 implementiert.

11. Nicht-flüchtiges computerlesbares Speichermedium, das ein Computerprogramm (503) speichert, wobei das Computerprogramm (503), wenn es durch einen Prozessor (501) ausgeführt wird, die Schritte des Drehmomentsteuerungsverfahrens für ein Frontantriebsfahrzeug nach einem der Ansprüche 1 bis 9 implementiert.

## Revendications

1. Procédé de commande de couple pour un véhicule à traction avant, le procédé comprenant :
une étape de calcul (S202) qui consiste à calculer un rapport d'une vitesse de rotation réelle sur une vitesse de rotation de référence d'un mécanisme de puissance tel qu'un moteur électrique ou qu'un moteur à combustion ; et
une étape de réduction (S203) qui consiste à réduire un couple de sortie du mécanisme de puissance lorsque le rapport est supérieur ou égal à un seuil prédéfini qui est étalonné sur la base de données expérimentales ;
**caractérisé en ce que**, en réponse à une requête de réglage de couple qui est générée sur la base d'une condition de fonctionnement de véhicule, le procédé comprend :
une étape de détermination (S201) qui consiste à déterminer la vitesse de rotation de référence du mécanisme de puissance sur la base d'une vitesse de rotation de roue arrière et d'une vitesse d'entraînement de référence qui est déterminée par v = n π r, où v est la vitesse d'entraînement de référence, n est la vitesse de rotation de roue arrière et r est un rayon de roue arrière, dans lequel l'étape de détermination (S201) comprend :
la détermination d'un décalage de vitesse de véhicule qui correspond à la vitesse d'entraînement de référence et à la condition de fonctionnement de véhicule par l'intermédiaire d'une table de données prédéfinie, dans lequel la table de données prédéfinie comprend une correspondance entre la vitesse d'entraînement de référence, la condition de fonctionnement de véhicule et le décalage de vitesse de véhicule ;
la correction de la vitesse d'entraînement de référence en fonction du décalage de vitesse de véhicule ; et
la détermination de la vitesse de rotation de référence du mécanisme de puissance en fonction de la vitesse de rotation de roue arrière et de la vitesse d'entraînement de référence corrigée.

2. Procédé de commande de couple pour un véhicule à traction avant tel que revendiqué selon la revendication 1, dans lequel :
l'étape de (S201) qui consiste à déterminer un décalage de vitesse de véhicule qui correspond à la vitesse d'entraînement de référence et à la condition de fonctionnement de véhicule par l'intermédiaire d'une table de données prédéfinie comprend :
la détermination d'une première composante de décalage de vitesse de véhicule qui correspond au degré d'ouverture de la pédale d'accélérateur, d'une deuxième composante de décalage de vitesse de véhicule qui correspond à l'angle de volant de direction, d'une troisième composante de décalage de vitesse de véhicule qui correspond à la pente de route et d'une quatrième composante de décalage de vitesse de véhicule qui correspond à la différence de vitesse de roue par l'intermédiaire de la table de données prédéfinie ; et
la détermination du décalage de vitesse de véhicule sur la base des composantes, de la première composante de décalage de vitesse de véhicule à la quatrième composante de décalage de vitesse de véhicule.

3. Procédé de commande de couple pour un véhicule à traction avant tel que revendiqué selon la revendication 2, dans lequel :
l'étape de (S201) qui consiste à déterminer le décalage de vitesse de véhicule sur la base des composantes, de la première composante de décalage de vitesse de véhicule à la quatrième composante de décalage de vitesse de véhicule comprend :
la sommation de la première composante de décalage de vitesse de véhicule, de la deuxième composante de décalage de vitesse de véhicule, de la troisième composante de décalage de vitesse de véhicule et de la quatrième composante de décalage de vitesse de véhicule afin d'obtenir le décalage de vitesse de véhicule.

4. Procédé de commande de couple pour un véhicule à traction avant tel que revendiqué selon la revendication 1, dans lequel :
l'étape qui consiste à corriger la vitesse d'entraînement de référence en fonction du décalage de vitesse de véhicule comprend :
la correction de la vitesse d'entraînement de référence sur la base de v' = (1 + a) . v, où a est le décalage de vitesse de véhicule, v est la vitesse d'entraînement de référence et v' est la vitesse d'entraînement de référence corrigée.

5. Procédé de commande de couple pour un véhicule à traction avant tel que revendiqué selon la revendication 1, dans lequel :
l'étape de (S201) qui consiste à déterminer la vitesse de rotation de référence du mécanisme de puissance en fonction de la vitesse de rotation de roue arrière et d'une vitesse d'entraînement de référence corrigée comprend :
la détermination d'une vitesse de rotation de roue arrière corrigée en fonction de la vitesse d'entraînement de référence corrigée et d'un rayon de roue arrière ; et
la détermination de la vitesse de rotation de référence du mécanisme de puissance en fonction de la vitesse de rotation de roue arrière corrigée et d'un rapport de vitesses prédéfini, dans lequel le rapport de vitesses prédéfini représente une relation entre la vitesse de rotation de roue arrière et une vitesse de rotation du mécanisme de puissance.

6. Procédé de commande de couple pour un véhicule à traction avant tel que revendiqué selon la revendication 1, dans lequel :
l'étape de (S203) qui consiste à réduire un couple de sortie du mécanisme de puissance comprend :
la détermination d'un coefficient de pondération du couple sur la base du rapport ; dans lequel le rapport est inversement proportionnel au coefficient de pondération du couple, et le coefficient de pondération du couple représente un degré de réglage du couple de sortie du mécanisme de puissance ; et
le réglage du couple de sortie du mécanisme de puissance sur la base du coefficient de pondération du couple.

7. Procédé de commande de couple pour un véhicule à traction avant tel que revendiqué selon la revendication 6, dans lequel :
l'étape qui consiste à régler le couple de sortie du mécanisme de puissance sur la base du coefficient de pondération du couple comprend :
la multiplication du coefficient de pondération du couple par le couple de sortie du mécanisme de puissance afin de calculer un couple de sortie réglé, et le réglage du couple de sortie du mécanisme de puissance en fonction du couple de sortie réglé ; dans lequel le coefficient de pondération du couple est une valeur dans une plage de (0, 1).

8. Procédé de commande de couple pour un véhicule à traction avant tel que revendiqué selon la revendication 6, dans lequel :
l'étape qui consiste à déterminer un coefficient de pondération du couple sur la base du rapport comprend :
la détermination du coefficient de pondération du couple qui correspond au rapport sur la base d'une table de données prédéfinie, dans lequel la table de données prédéfinie stocke une correspondance entre le rapport et le coefficient de pondération du couple.

9. Procédé de commande de couple pour un véhicule à traction avant tel que revendiqué selon la revendication 1, dans lequel :
avant de répondre à la requête de réglage de couple, le procédé comprend en outre :
la génération de la requête de réglage de couple lorsque la condition de fonctionnement de véhicule satisfait une condition prédéfinie ;
dans lequel :
le fait que la condition de fonctionnement de véhicule satisfasse la condition prédéfinie comprend la satisfaction d'une ou de plusieurs des sous-conditions suivantes : une position de rapport de vitesse est une position de rapport de vitesse de marche avant, la vitesse d'entraînement de référence est à l'intérieur d'une plage de vitesses de véhicule prédéfinie, un degré d'ouverture d'une pédale d'accélérateur est à l'intérieur d'une zone d'ouverture prédéfinie, un angle de volant de direction est inférieur à un seuil d'angle prédéfini, une pente de route est inférieure à un seuil de pente prédéfini et une différence de vitesse de roue entre une vitesse de rotation d'une roue avant gauche et une vitesse de rotation d'une roue avant droite est inférieure à un seuil de vitesse.

10. Véhicule, comprenant un dispositif électronique (500), le dispositif électronique comprenant une mémoire (502), un processeur (501) et un programme informatique (503) qui est stocké dans la mémoire (502) et qui peut être exécuté sur le processeur (501), dans lequel, lorsqu'il est exécuté par le processeur (501), le programme informatique (503) met en œuvre les étapes du procédé de commande de couple pour un véhicule à traction avant tel que revendiqué selon l'une quelconque des revendications 1 à 9.

11. Support de stockage lisible par ordinateur non volatile, le support de stockage lisible par ordinateur stockant un programme informatique (503), dans lequel, lorsqu'il est exécuté par un processeur (501), le programme informatique (503) met en œuvre les étapes du procédé de commande de couple pour un véhicule à traction avant tel que revendiqué selon l'une quelconque des revendications 1 à 9.
